(19) Europäisches Patentamt
European Patent Office
Office européen des brevets

(11) **EP 4 664 085 A1**

(12) **DEMANDE DE BREVET EUROPEEN**

(43) Date de publication:
**17.12.2025  Bulletin 2025/51**

(21) Numéro de dépôt: **25182564.2**

(22) Date de dépôt: **13.06.2025**

(51) Classification Internationale des Brevets (IPC):
**G01L 5/24** *(2006.01)*     **G01N 29/07** *(2006.01)*
**G01N 29/12** *(2006.01)*     *F16B 31/02* *(2006.01)*
**G01N 29/22** *(2006.01)*

(52) Classification Coopérative des Brevets (CPC):
**G01L 5/246; G01N 29/07; G01N 29/12;**
**G01N 29/227;** F16B 2031/022; G01N 2291/02827;
G01N 2291/269

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **13.06.2024  FR 2406286**

(71) Demandeur: **LISI Aerospace**
**75012 Paris (FR)**

(72) Inventeur: **ROUSSEAU, Clément**
**95310 SAINT-OUEN L'AUMÔNE (FR)**

(74) Mandataire: **Lavoix**
**2, place d'Estienne d'Orves**
**75441 Paris Cedex 09 (FR)**

(54) **SYSTÈME DE CONTRÔLE DE LA TENSION D'UNE FIXATION DANS UN ASSEMBLAGE ET PROCÉDÉ DE CONTRÔLE ASSOCIÉ**

(57)    La présente invention concerne un système de contrôle (10) de la tension d'une fixation (12) dans un assemblage (36), ladite fixation (12) comprenant une tige (14) et un organe d'assemblage (16), le système de contrôle (10) comprenant :
- un premier dispositif de mesure (44), le premier dispositif de mesure (44) étant propre à mesurer un premier paramètre représentatif de la réponse temporelle de la tige (14) à une excitation ultrasonore,
- un deuxième dispositif de mesure (46) propre à mesurer un deuxième paramètre représentatif de la réponse fréquentielle de la tige (14) à une excitation ultrasonore, et
- un calculateur (48), le calculateur (48) étant propre à déterminer une valeur de la tension de la tige (14) en fonction au moins dudit premier paramètre et dudit deuxième paramètre.

FIG.1

EP 4 664 085 A1

**Description**

La présente invention concerne un système de contrôle de la tension d'une fixation dans un assemblage. Elle se rapporte également à un procédé de contrôle correspondant.

L'invention s'applique particulièrement, mais de manière non limitative, au contrôle du serrage de fixations d'aéronefs.

Dans le domaine aéronautique, il est utile de connaître la précharge d'une fixation installée, notamment une fixation de type vis/écrou. La précharge d'une fixation est la tension mécanique créée initialement dans la fixation lorsqu'elle serre un assemblage de pièces, lors de la fabrication d'un aéronef par exemple. La connaissance précise de la tension installée est primordiale pour assurer la pérennité de l'assemblage dans le temps, sous l'effet de contraintes extérieures. En effet, un serrage trop intense peut détériorer la vis ou la pièce dans laquelle elle est vissée, et un serrage trop faible peut conduire à la désolidarisation de la vis par rapport à l'assemblage.

En particulier, il est utile de pouvoir contrôler l'évolution dans le temps de ladite tension, afin de prévoir des opérations de maintenance. Une méthode connue pour connaître la tension dans une vis est de mesurer par ondes ultrasonores l'allongement de la vis. Cette méthode nécessite cependant de procéder à deux mesures, une à l'état libre non contraint, et une à l'état serré. Par ailleurs, il n'est pas possible de mesurer la tension via la mesure de l'allongement, par exemple lors d'une opération de maintenance, si la mesure à l'état libre de la fixation lors de la fabrication de l'aéronef n'est pas sauvegardée dans une base de données, qui est ensuite mise à disposition d'un tiers réalisant l'opération de maintenance.

Il est connu des techniques permettant de connaître la tension dans une vis déjà installée dans son écrou même si l'état initial n'est pas connu.

En particulier, il peut être utilisé un procédé basé sur l'exploitation de la propagation d'ondes ultrasonores longitudinales (selon l'axe de la vis) et transversales (à incidence normale à l'axe de la vis). Par exemple, en connaissant les temps de vol de chacun des deux types d'onde, il est possible de remonter à la tension de la vis.

Toutefois, en pratique, la transmission des ondes transversales est limitée, de sorte que des capteurs complexes et encombrants sont utilisés.

De plus, ce procédé donne des mesures très dispersives pour des vis en alliage de titane, alliage massivement utilisé dans des aéronefs, et les mesures sont très sensibles aux variations de températures.

Il existe donc un besoin pour un système de contrôle de la tension d'une tige d'une fixation dans un assemblage qui soit de mise en œuvre plus aisée et utilisable pour tout type de tige.

A cet effet, la description décrit un système de contrôle de la tension d'une fixation dans un assemblage, ladite fixation comprenant une tige et un organe d'assemblage, le système de contrôle comprenant :

- un premier dispositif de mesure, le premier dispositif de mesure étant propre à contrôler un premier paramètre représentatif de la réponse temporelle de la tige à une excitation ultrasonore,
- un deuxième dispositif de mesure, le deuxième dispositif de mesure étant propre à contrôler au un deuxième paramètre représentatif de la réponse fréquentielle de la tige à une excitation ultrasonore, et
- un calculateur, le calculateur étant propre à déterminer une valeur de la tension de la tige en fonction au moins dudit premier paramètre et dudit deuxième paramètre.

Selon des modes de réalisation particuliers, le système de contrôle présente une ou plusieurs des caractéristiques suivantes, prise(s) isolément ou selon toutes les combinaisons techniquement possibles :

- un premier paramètre est le temps de vol d'une onde ultrasonore longitudinale ou transversale dans la tige.
- un deuxième paramètre est un intervalle de fréquence entre deux fréquences de résonance de la tige.
- le calculateur détermine la valeur de la tension de la tige également en fonction d'un paramètre relatif à la tige.
- le calculateur calcule la valeur F de la tension de la tige en appliquant la formule suivante :

$$F = \frac{1}{\kappa}\sqrt{1 - t_\sigma \cdot f_\sigma^1}$$

où :

$\kappa$ désigne le paramètre relatif à la tige,
$t_\sigma$ désigne le temps de vol d'une excitation ultrasonore dans la tige sous contrainte, et

$f_\sigma^1$ désigne l'intervalle de fréquence entre deux fréquences de résonance de la tige sous contrainte.

- le premier dispositif de mesure comporte :

  - une première sonde ultrasonore agencée pour générer une excitation ultrasonore de la tige et collecter un signal de réponse de la tige à l'excitation générée,
  - un premier dispositif d'acquisition, le premier dispositif d'acquisition étant propre à commander la première sonde ultrasonore selon une première loi de commande et à recevoir le signal de réponse, la première loi de commande étant une loi impulsionnelle, et

- un premier dispositif de calcul, le premier dispositif de calcul étant propre à traiter le signal de réponse pour extraire le premier paramètre.

- il est défini un axe principal pour la tige, la première sonde ultrasonore étant agencée pour générer une excitation ultrasonore se propageant selon l'axe principal de la tige.
- le deuxième dispositif de mesure comporte :

    - une deuxième sonde ultrasonore agencée pour générer une excitation ultrasonore de la tige et collecter une pluralité de signaux de réponse de la tige à l'excitation générée,
    - un deuxième dispositif d'acquisition, le deuxième dispositif d'acquisition étant propre à commander la deuxième sonde ultrasonore selon une deuxième loi de commande et à recevoir la pluralité de signaux de réponse, la deuxième loi de commande comportant un train d'impulsions à différentes fréquences, et
    - un deuxième dispositif de calcul, le deuxième dispositif de calcul étant propre à traiter la pluralité de signaux de réponse pour extraire le deuxième paramètre.

- le deuxième dispositif de calcul est propre à réaliser une analyse fréquentielle de la pluralité de signaux de réponse.
- la première sonde ultrasonore et la deuxième sonde ultrasonore sont confondues et comportent un transducteur ultrasonore en titano-zirconates de plomb.

La description décrit aussi un procédé de contrôle de la tension d'une fixation dans un assemblage, ladite fixation comprenant une tige et un organe d'assemblage, le procédé de contrôle comprenant les étapes de:

- mesure d'un premier paramètre de la réponse temporelle de la tige à une excitation ultrasonore,
- mesure d'un deuxième paramètre de la réponse fréquentielle de la tige à une excitation ultrasonore, et
- détermination de la valeur de la tension de la tige en fonction au moins dudit premier paramètre et dudit deuxième paramètre.

Dans la présente description, l'expression « propre à » signifie indifféremment « adapté pour », « adapté à » ou « configuré pour ».
Des caractéristiques et avantages de l'invention apparaîtront à la lecture de la description qui va suivre, donnée uniquement à titre d'exemple non limitatif, et faite en référence aux dessins annexés, sur lesquels :

- la figure 1 est une représentation schématique d'un système de contrôle de la tension d'une vis, le système de contrôle comportant un premier dispositif de mesure et un deuxième dispositif de mesure,

- la figure 2 est un schéma-bloc du premier dispositif de contrôle de la figure 1,

- la figure 3 est une représentation schématique de plusieurs lois de commande que le premier dispositif de mesure de la figure 2 est propre à utiliser,

- la figure 4 est une représentation schématique d'un signal rétrodiffusé par la vis que le premier dispositif de mesure de la figure 2 est propre à recevoir,

- la figure 5 est un schéma-bloc du deuxième dispositif de mesure de la figure 1,

- la figure 6 est une représentation schématique d'une loi de commande que le deuxième dispositif de mesure de la figure 5 est propre à utiliser,

- la figure 7 est une représentation schématique d'un signal obtenu par le deuxième dispositif de mesure après traitement des signaux rétrodiffusés par la vis en présence d'une excitation correspondant à la loi de commande de la figure 6, et

- la figure 8 est un ordinogramme d'un exemple de mise en œuvre d'un procédé de contrôle de la tension.

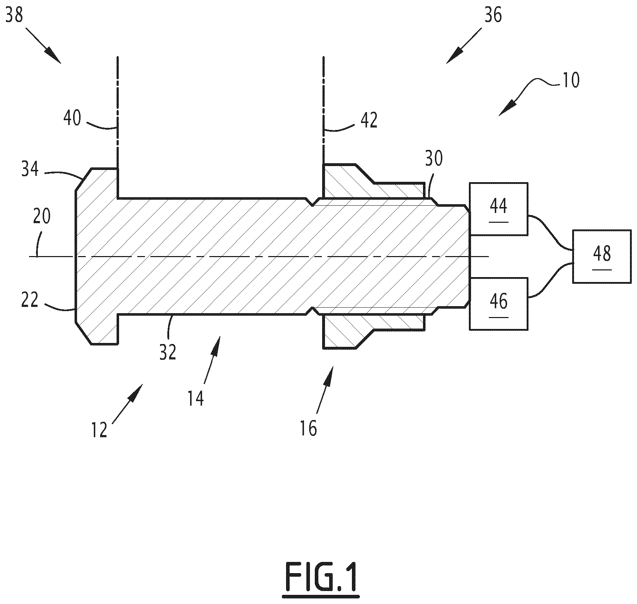

Un système de contrôle 10 est illustré sur la figure 1.
Le système de contrôle 10 est propre à contrôler la tension d'une fixation 12, également visible sur la figure 1.
La fixation 12 comporte une tige 14 et un organe 16 d'assemblage. La tige 14 et l'organe 16 d'assemblage sont représentés en coupe.
La tige 14 s'étend selon un premier axe 20 entre une première extrémité et une seconde extrémité. La tige 14 comprend une face 22 plane, perpendiculaire au premier axe 20, formant ladite première extrémité.
La tige 14 comprend en outre un élément 30 d'assemblage, disposé sur une surface radiale de ladite tige 14. L'élément 30 d'assemblage est apte à coopérer avec l'organe 16 d'assemblage, de sorte à former la fixation 12 à partir de la tige 14 et de l'organe 16 d'assemblage.
Dans le mode de réalisation représenté, la tige 14 est une vis et l'élément d'assemblage est une portion filetée 30 de ladite vis 14. La vis 14 comprend en outre un fût 32 lisse, aligné avec la portion filetée 30 selon le premier axe 20.
Dans le mode de réalisation représenté, la vis 14 comporte en outre une tête 34 élargie, adjacente au fût 32 lisse. La tête 34 forme une saillie radiale par rapport audit fût 32.

Dans le mode de réalisation représenté, la face 22 plane de la vis 14 est formée par la tête 34.

Comme précisé ci-dessus, l'organe 16 d'assemblage est apte à s'assembler à l'élément 30 d'assemblage de la vis 14 pour former la fixation 12.

Dans le mode de réalisation représenté, l'organe 16 d'assemblage est un écrou 16 taraudé, apte à s'assembler à la portion filetée 30 de la vis 14.

En particulier, la fixation 12 est apte à former un assemblage 36 avec des éléments structurels 38, superposés de manière à présenter une première 40 et une seconde 42 faces opposées. Dans l'assemblage 36, le fût 32 de la vis 14 est disposé dans un perçage (non représenté) des éléments structurels 38 ; la tête 34 est en appui contre la première face 40 ; et l'écrou 16 est assemblé à la portion filetée 30 de la vis 14 et est en appui contre la seconde face 42. Une tension de serrage est appliquée dans la vis 14 par le serrage de l'écrou 16.

Le système de contrôle 10 est propre à contrôler la tension d'une fixation 12 en déterminant une valeur de tension de la tige 14.

Le système de contrôle 10 comporte un premier dispositif de mesure 44, un deuxième dispositif de mesure 46 et un calculateur 48.

Le premier dispositif de mesure 44 est propre à mesurer au moins un premier paramètre représentatif de la réponse temporelle de la vis 14 à une excitation ultrasonore.

La réponse temporelle est la variation du signal rétrodiffusé (ou l'écho) par la vis 14 avec le temps.

Selon l'exemple décrit, le premier paramètre que le premier dispositif de mesure 44 est propre à mesurer est le temps de vol d'une excitation ultrasonore longitudinale dans la vis 14.

Le temps de vol est le temps de propagation de l'excitation ultrasonore. Le temps de vol correspond ainsi au temps écoulé entre l'instant d'émission de l'excitation ultrasonore par un transducteur et la réception de l'écho de l'excitation par le même transducteur. Pour la suite, le temps de vol est noté $t_\sigma$.

L'excitation ultrasonore peut également en variante être une excitation ultrasonore transversale.

Un autre exemple de premier paramètre est le décalage dans le temps de la fréquence de résonance de la vis 14 induite par la ou les ondes ultrasonores injectées.

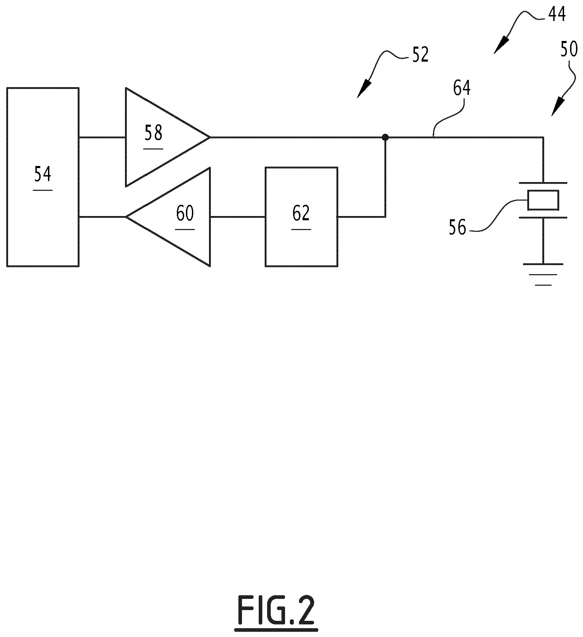

Comme visible sur la figure 2, le premier dispositif de mesure 44 comporte une première sonde ultrasonore 50, un premier dispositif d'acquisition 52 et un premier dispositif de calcul 54.

La première sonde ultrasonore 50 est agencée pour générer une excitation ultrasonore de la vis 14 et collecter un signal de réponse de la vis 14 à l'excitation générée.

Plus précisément, la première sonde ultrasonore 50 est une sonde axiale au sens où la première sonde ultrasonore 50 est agencée pour générer une excitation ultrasonore se propageant selon l'axe principal de la vis 14.

Selon l'exemple décrit, la première sonde ultrasonore 50 est un transducteur comportant un capteur piézoélectrique 56.

Comme son nom l'indique, le capteur 56 est réalisé en un matériau piézoélectrique, c'est-à-dire un matériau capable de convertir un signal électrique en signal acoustique et réciproquement un signal acoustique en signal électrique.

Avantageusement, le matériau piézoélectrique est un titano-zirconates de plomb, par exemple du PZT-4 ou du PZT-8 correspondant respectivement aux types I et III de la norme MIL-STD-1376B.

L'emploi de tels matériaux permet d'obtenir un transducteur présentant un facteur de qualité mécanique élevé : un tel matériau tendra à résonner longtemps en réponse à une excitation.

Le premier dispositif d'acquisition 52 est un circuit électronique de commande de la première sonde ultrasonore 50.

Le premier dispositif d'acquisition 52 est propre à commander la première sonde ultrasonore 50 selon une première loi de commande et à recevoir le signal rétrodiffusé.

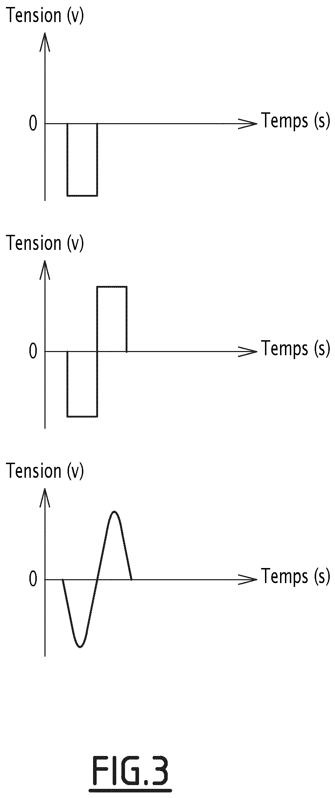

Des exemples de première loi de commande sont représentées sur la figure 3.

Chaque première loi de commande est une loi impulsionnelle, c'est-à-dire qu'elle comprend uniquement des impulsions électriques (en volts) en fonction du temps (par exemple en secondes).

Plus précisément, dans le cas de la figure 3, chaque première loi de commande comporte au moins une impulsion, soit demi-périodique soit périodique.

Le premier cas représenté en haut de la figure 3 correspond à une impulsion rectangulaire unipolaire négative demi-périodique, le deuxième cas représenté au milieu de la figure 3 à une impulsion rectangulaire bipolaire périodique (deux impulsions demi-périodiques de signe opposé) et le troisième cas au bas de la figure 3 à une impulsion sinusoïdale bipolaire (deux impulsions demi-périodiques de signe opposé).

Le premier dispositif d'acquisition 52 comporte un premier émetteur 58, un premier récepteur 60 et une première unité d'isolation 62.

Le premier émetteur 58 est propre à émettre le signal électrique correspondant à la première loi de commande.

Le premier émetteur 58 est relié à la première sonde ultrasonore 50 par une piste électrique 64 par lequel la première loi de commande transite.

Le premier récepteur 60 est propre à recevoir le signal électrique correspondant au signal rétrodiffusé capté par la première sonde ultrasonore 50.

La première unité d'isolation 62 est propre à isoler le premier récepteur 60 du premier émetteur 58.

Ainsi, la première unité d'isolation 62 est propre à protéger le premier récepteur pour éviter une émission d'entrée de tension électrique trop haute.

Le premier dispositif de calcul 54 est propre à traiter le signal de réponse pour extraire l'au moins un premier paramètre, ici le temps de vol $t_\sigma$.

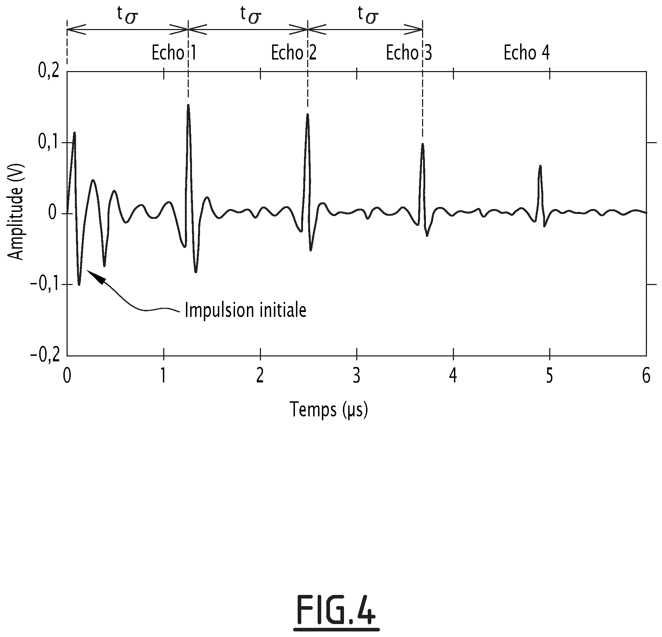

La figure 4 illustre le signal rétrodiffusé reçu par le premier récepteur où l'impulsion initiale est mise en évidence par une flèche.

L'écart entre les échos correspond au temps de vol $t_\sigma$ cherché.

Selon les cas, l'écart peut être mesuré directement ou en utilisant une moyenne.

Par exemple, on peut mesurer l'écart pour trois échos et diviser par trois ou mesurer l'écart avec le premier écho, l'écart entre le premier écho et le deuxième écho et l'écart entre le deuxième écho et le troisième écho et faire une moyenne des trois valeurs pour obtenir le temps de vol $t_\sigma$.

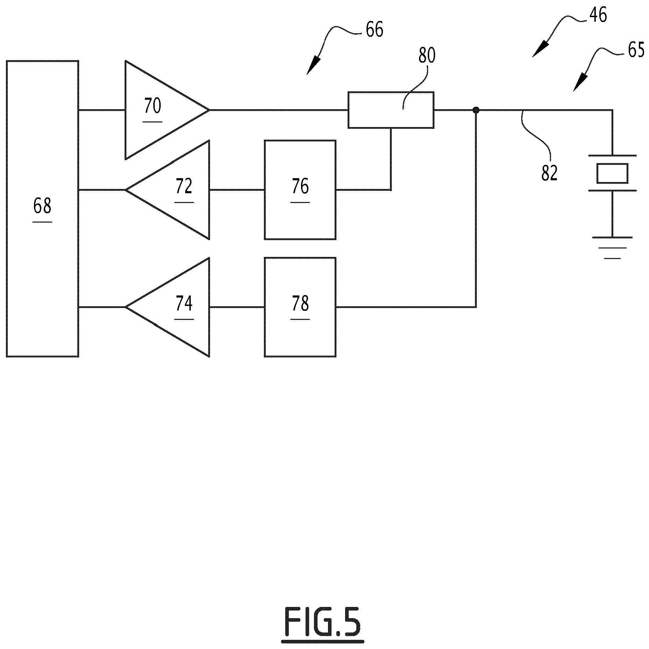

Comme visible sur la figure 5, le deuxième dispositif de mesure 46 comporte une deuxième sonde ultrasonore 65, un deuxième dispositif d'acquisition 66 et un deuxième dispositif de calcul 68.

Le deuxième dispositif de mesure 46 est propre à mesurer au moins un deuxième paramètre représentatif de la réponse fréquentielle de la vis 14 à une excitation ultrasonore.

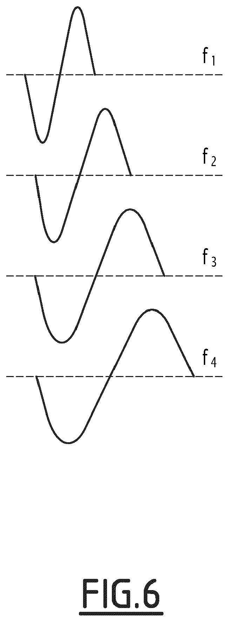

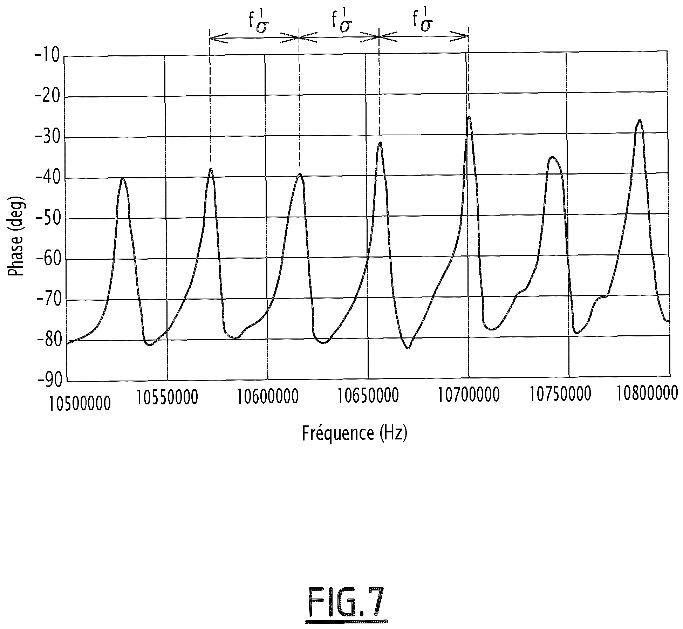

La réponse fréquentielle est une reconstruction des signaux rétrodiffusés pour chaque fréquence d'excitation suivant une deuxième loi de commande, par exemple décrite en figure 6. Un exemple d'une telle reconstruction est représenté en figure 7.

Selon l'exemple décrit, le deuxième paramètre que le deuxième dispositif de mesure 46 est propre à mesurer est un intervalle de fréquence $f_\sigma^1$ entre deux ou plusieurs fréquences de résonance consécutives de la vis 14.

Le deuxième paramètre est selon une variante similaire un ensemble de fréquences de résonances de la vis 14.

Les mêmes remarques que pour la première sonde ultrasonore 50 s'appliquent pour la deuxième sonde ultrasonore 68.

Avantageusement, la première sonde ultrasonore 50 et la deuxième sonde ultrasonore 68 sont confondues.

Le premier dispositif de mesure 44 et le deuxième dispositif de mesure 46 utilisent donc la même sonde ultrasonore, ce qui permet de réduire la compacité du système de contrôle 10.

Le deuxième dispositif d'acquisition 66 est un circuit électronique de commande de la deuxième sonde ultrasonore. Le deuxième dispositif d'acquisition 66 est propre à commander la deuxième sonde ultrasonore 65 selon une deuxième loi de commande et à recevoir la pluralité de signaux de réponse.

Un exemple de deuxième loi de commande est représenté sur la figure 6.

Comme visible sur cette figure, la deuxième loi de commande comporte un train d'impulsions à différentes fréquences.

Plus précisément, il s'agit d'une série d'impulsions sinusoïdales de même amplitude mais de fréquences différentes (ici f1, f2, f3 et f4 mais ce nombre n'est pas limitatif).

Le deuxième dispositif d'acquisition 66 comporte un deuxième émetteur 70, un deuxième récepteur 72, un troisième récepteur 74, une deuxième unité de protection 76, une troisième unité de protection 78 et une résistance calibrée 80.

Le deuxième émetteur 70 est propre à émettre le signal électrique correspondant à la deuxième loi de commande.

Le deuxième émetteur 70 est relié à la deuxième sonde ultrasonore 65 par une piste électrique 82 par laquelle la deuxième loi de commande transite.

Le deuxième récepteur 72 est propre à recevoir le signal électrique correspondant au signal rétrodiffusé capté par la deuxième sonde ultrasonore 65 après passage par la résistance calibrée 80. La résistance calibrée 80 forme ici un shunt.

La deuxième unité d'isolation 76 est propre à isoler le deuxième récepteur 72 du deuxième émetteur 70.

Ainsi, la deuxième unité d'isolation 76 est propre à protéger le deuxième récepteur 72 pour éviter une émission d'entrée de tension électrique trop haute.

Les mêmes remarques valent pour le troisième récepteur 74 et la troisième unité d'isolation 76.

La seule différence est que le troisième récepteur 74 est directement relié à la deuxième sonde ultrasonore 65 (pas de shunt).

La présence des deux récepteurs 72 et 74 ainsi agencés et de la résistance calibrée 80 permet d'analyser la variation d'impédance liée aux trains d'impulsions.

Le deuxième dispositif d'acquisition 46 joue ainsi le rôle d'un analyseur d'impédance. Le deuxième dispositif d'acquisition 46 peut être un analyseur de réseau vectoriel, communément désigné par l'abréviation VNA.

Le deuxième dispositif de calcul 68 est propre à traiter le signal de réponse pour extraire l'au moins un deuxième paramètre, ici l'intervalle de fréquence $f_\sigma^1$ entre deux fréquences de résonances de la vis 14.

Pour cela, le deuxième dispositif de calcul 68 réalise une analyse fréquentielle reconstruite à partir des signaux collectés, par exemple par une transformée de Fourier des signaux collectés.

La figure 7 illustre un exemple de courbe pouvant résulter d'une telle analyse. Plus précisément, la figure 7 représente la variation de la phase de l'impédance de la deuxième sonde ultrasonore 65 en fonction de la fréquence de l'impulsion appliquée.

La courbe présente des pics, chaque pic correspondant à une fréquence de résonance de la vis 14.

L'écart entre deux pics correspond à l'intervalle de fréquence $f_\sigma^1$ cherché.

Le calculateur 48 est un circuit électronique conçu pour manipuler et/ou transformer des données représentées par des quantités électroniques ou physiques dans des registres du calculateur et/ou des mémoires en d'autres données similaires correspondant à des données physiques dans les mémoires de registres ou d'autres types de dispositifs d'affichage, de dispositifs de transmission ou de dispositifs de mémorisation.

En tant qu'exemples spécifiques, le calculateur 48 comprend un processeur monocoeur ou multicoeurs, tel qu'une unité de traitement centrale (CPU), une unité de traitement graphique (GPU), un microcontrôleur et un processeur de signal numérique (DSP), un circuit logique programmable, comme un circuit intégré spécifique à une application (ASIC), un réseau de portes programmables *in situ* (FPGA), un dispositif logique programmable (PLD) et des réseaux logiques programmables (PLA), une machine à états, une porte logique et des composants matériels discrets.

Le calculateur 48 est propre à déterminer la valeur de la tension de la vis 14 en fonction au moins du premier paramètre et du deuxième paramètre.

Pour cela, le calculateur 48 utilise une fonction ayant comme variables d'entrée lesdits premier et deuxième paramètres, et donne en sortie une valeur calculée de la tension de la vis 14.

Selon les modes de réalisation, la fonction est plus ou moins complexe.

Par exemple, la fonction est un tableau que le calculateur 48 vient consulter pour obtenir la valeur cherchée.

Selon un autre exemple, la fonction peut être une fonction que le calculateur 48 vient appliquer pour obtenir, après calcul, la valeur cherchée.

Dans cette optique, la fonction peut être une fonction numérique ou une fonction plus élaborée, notamment un réseau de neurones qui aurait préalablement été appris.

La fonction peut également prendre plus de paramètres en entrée, comme d'autres mesures ou des valeurs prédéfinies.

Selon l'exemple décrit, la fonction prend en entrée un autre paramètre qui est un paramètre dépendant de la géométrie de la vis 14 et du matériau de la vis 14. Le paramètre dépendant de la vis 14 est ici une constante $\kappa$.

La constante $\kappa$ est, par exemple, obtenue en mesurant la tension F de la vis 14 par des tests préliminaires sur la vis 14, par exemple sur un banc de traction ou un banc de serrage instrumenté, et en mesurant soit la fréquence de résonance pour exploiter une première relation, soit le temps de propagation pour exploiter une deuxième relation.

La première relation s'écrit :

$$- \delta f^n = \kappa . f_0^n . F$$

Où :

- $\delta f^n$ est la variation fréquentielle de la n$^{\text{ième}}$ fréquence de résonance de la vis 14, entre un état initial au repos et un état sous contrainte ;
- $f_0^n$ désigne la n$^{\text{ième}}$ fréquence de résonance de la vis 14 dans un état initial au repos, et
- F désigne la tension de la vis 14.

La deuxième relation s'écrit :

$$\delta t = \kappa . t_0 . F$$

Où :

- $\delta t$ est la variation du temps de propagation de l'onde dans la vis, entre un état initial au repos et un état sous contrainte,
- $t_0$ désigne le temps de propagation de l'onde dans la vis dans un état initial au repos, et
- F désigne la tension de la vis.

A **partir de** l'une de ces deux campagnes de test, il est possible d'en déduire la valeur de la constante $\kappa$. Il est évidemment possible de réaliser les deux campagnes de test, afin d'affiner la valeur de la constante $\kappa$.

Il est avantageux de réaliser les tests sur une vis - ou d'un ensemble de vis - et de considérer que la valeur trouvée pour la constante $\kappa$ est valable pour toutes les vis du même type, par exemple ayant le même matériau, le même diamètre et la même longueur, du même lot de fabrication ou de lots de fabrication différents.

En répétant ces tests préliminaires sur différents types de vis, le calculateur 48 dispose d'une base de données donnant une valeur de la constante $\kappa$ pour un ensemble de types de vis, les types de vis différant par exemple par le matériau, le diamètre de la vis et la longueur de la vis.

Dans l'exemple décrit, le calculateur 48 utilise uniquement la constante $\kappa$, le temps de vol $t_\sigma$ et l'intervalle $f_\sigma^1$ entre deux fréquences de résonance de la vis 14 pour calculer la tension F dans la vis 14, en appliquant la formule suivante :

$$F = \frac{1}{\kappa} \sqrt{1 - t_\sigma . f_\sigma^1}$$

Le calculateur 48 obtient ainsi la valeur de la tension de la vis 14, sans connaître son état initial, ou son état de tension précédent si la tension a déjà été mesurée, par exemple lors d'une opération de maintenance.

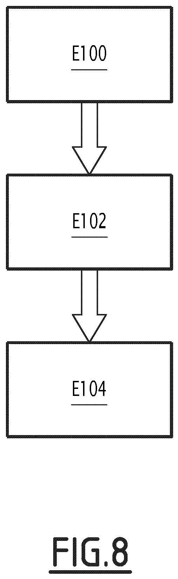

Le fonctionnement du système de contrôle 10 est maintenant décrit en référence à la figure 8 qui illustre un exemple de mise en œuvre d'un procédé de contrôle de la tension de la vis 14.

Le procédé de contrôle de la tension comporte une première étape de esure E100, une deuxième étape de mesure E102 et une étape de détermination E104.

Lors de la première étape de mesure E100, la première sonde ultrasonore 50 émet une excitation ultrasonore sous la forme d'une impulsion.

Cette impulsion se propage dans la vis 14 et est réfléchie vers la première sonde ultrasonore 50.

En collectant et en analysant le signal réfléchi, le premier dispositif de mesure 44 obtient la valeur d'au moins un premier paramètre de la réponse temporelle de la vis 14 à une excitation ultrasonore, à savoir, dans l'exemple décrit le temps de vol $t_\sigma$.

Lors de la deuxième étape de mesure E102, la deuxième sonde ultrasonore émet une excitation ultrasonore sous la forme d'un train d'impulsions.

Chaque impulsion se propage dans la vis 14 et est réfléchie vers la première sonde ultrasonore 50.

Le deuxième dispositif de mesure 46 collecte et analyse les signaux ainsi réfléchis.

Le deuxième dispositif de mesure 46 obtient ainsi le deuxième paramètre de la réponse fréquentielle de la vis 14 à une excitation ultrasonore, par exemple ici l'intervalle de fréquence $f_\sigma^1$ entre deux fréquences de résonances de la vis 14.

Lors de l'étape de détermination E104, le calculateur 48 applique la formule suivante :

$$F = \frac{1}{\kappa}\sqrt{1 - t_\sigma.(f_\sigma^1)}$$

Le résultat de cette formule donne la valeur de la tension F de la vis 14.

Le système de contrôle 10 permet ainsi d'obtenir de manière aisée la tension de la fixation 12.

En effet, il n'est pas l'état initial de contrainte dans la vis 14 pour obtenir la valeur cherchée.

Un opérateur effectuant ce contrôle peut alors décider, en fonction de la valeur de tension indiquée par le calculateur 48, s'il faut resserrer la fixation pour que la tension dans la fixation 12 soit dans la plage de tension préconisée. L'opérateur peut vérifier avec la même méthode si le serrage effectué a permis d'atteindre ladite plage de tension préconisée.

En outre, elle est utilisable pour tout type de vis, et notamment les vis 14 de petites tailles ou déjà installés.

De plus, il est possible de mettre en œuvre l'invention avec uniquement des ondes longitudinales et d'utiliser un seul transducteur.

D'autres modes de réalisation bénéficiant des avantages précédents sont également envisageables.

Par exemple, le premier dispositif de mesure 44 et le deuxième dispositif de mesure 46 sont regroupés dans un même boîtier.

En variante ou en complément, le calculateur 48, le premier dispositif de calcul 54 et le deuxième dispositif de calcul 56 peuvent être confondus.

Avantageusement, seul un calculateur, par exemple le calculateur 48, mettra en œuvre les traitements réalisés par le premier dispositif de calcul 54 et le deuxième dispositif de calcul 56.

L'invention a été décrite pour une fixation comprenant une tige filetée et un écrou. L'invention s'applique également à tout type de fixations, comprenant par exemple une tige filetée et une bague de sertissage, un rivet à sertir et une bague de sertissage, ou une fixation aveugle sertie, vissée, ou tirée - vissée. Pour déterminer la tension d'une fixation aveugle, les premier et deuxième dispositifs de mesure 44 et 46 seront alors mis en contact avec la surface accessible de la fixation, c'est-à-dire généralement la tête de la fixation, la surface de l'extrémité opposée étant généralement non accessible.

**Revendications**

1. Système de contrôle (10) de la tension d'une fixation (12) dans un assemblage (36), ladite fixation (12) comprenant une tige (14) et un organe d'assemblage (16), le système de contrôle (10) comprenant :

   - un premier dispositif de mesure (44), le premier dispositif de mesure (44) étant propre à mesurer un premier paramètre représentatif de la réponse temporelle de la tige (14) à une excitation ultrasonore,
   - un deuxième dispositif de mesure (46), le deuxième dispositif de mesure (46) étant propre à mesurer un deuxième paramètre représentatif de la réponse fréquentielle de la tige (14) à une excitation ultrasonore, et
   - un calculateur (48), le calculateur (48) étant propre à déterminer une valeur de la tension de la tige (14) en fonction au moins dudit premier paramètre et dudit deuxième paramètre.

2. Système de contrôle selon la revendication 1, dans lequel le premier paramètre est le temps de vol d'une onde ultrasonore longitudinale ou transversale dans la tige (14).

3. Système de contrôle selon la revendication 1 ou 2, dans lequel le deuxième paramètre est un intervalle de fréquence entre deux fréquences de résonance de la tige (14).

4. Système de contrôle selon l'une quelconque des revendications 1 à 3, dans lequel le calculateur (48) détermine la valeur de la tension de la tige (14) également en fonction d'un paramètre ($\kappa$) relatif à la tige (14).

5. Système de contrôle selon la revendication 4, dans lequel le calculateur (48) calcule la valeur F de la tension de la tige (14) en appliquant la formule suivante :

$$F = \frac{1}{\kappa}\sqrt{1 - t_\sigma . f_\sigma^1}$$

où :

$\kappa$ désigne le paramètre relatif à la tige (14),
$t_\sigma$ désigne le temps de vol d'une excitation ultrasonore dans la tige (14), et

$f_\sigma^1$ désigne l'intervalle de fréquence entre deux fréquences de résonance de la tige (14).

6. Système de contrôle selon l'une quelconque des revendications 1 à 5, dans lequel le premier dispositif de mesure (44) comporte :

- une première sonde ultrasonore (50) agencée pour générer une excitation ultrasonore de la tige (14) et collecter un signal de réponse de la tige (14) à l'excitation générée,
- un premier dispositif d'acquisition (52), le premier dispositif d'acquisition (52) étant propre à commander la première sonde ultrasonore (50) selon une première loi de commande et à recevoir le signal de réponse, la première loi de commande étant une loi impulsionnelle, et
- un premier dispositif de calcul (54), le premier dispositif de calcul (54) étant propre à traiter le signal de réponse pour extraire le premier paramètre.

7. Système de contrôle selon la revendication 6, dans lequel il est défini un axe principal pour la tige (14), la première sonde ultrasonore (50) étant agencée pour générer une excitation ultrasonore se propageant selon l'axe principal de la tige (14).

8. Système de contrôle selon l'une quelconque des revendications 1 à 7, dans lequel le deuxième dispositif de mesure (46) comporte :

- une deuxième sonde ultrasonore (65) agencée pour générer une excitation ultrasonore de la tige (14) et collecter une pluralité de signaux de réponse de la tige (14) à l'excitation générée,
- un deuxième dispositif d'acquisition (66), le deuxième dispositif d'acquisition (66) étant propre à commander la deuxième sonde ultrasonore (65) selon une deuxième loi de commande et à recevoir la pluralité de signaux de réponse, la deuxième loi de commande comportant un train d'impulsions à différentes fréquences, et
- un deuxième dispositif de calcul (68), le deuxième dispositif de calcul (68) étant propre à traiter la pluralité de signaux de réponse pour extraire le deuxième paramètre.

9. Système de contrôle selon la revendication 8, dans lequel le deuxième dispositif de calcul (68) est propre à réaliser une analyse fréquentielle de la pluralité de signaux de réponse.

10. Système de contrôle selon les revendications 6 et 8, dans lequel la première sonde ultrasonore (50) et la deuxième sonde ultrasonore (65) sont confondues et comportent un transducteur ultrasonore en titano-zirconates de plomb.

11. Procédé de contrôle de la tension d'une fixation (12) dans un assemblage (16), ladite fixation comprenant une tige (14) et un organe d'assemblage (16), le procédé de contrôle comprenant les étapes de :

- mesure d'un premier paramètre de la réponse temporelle de la tige (14) à une excitation ultrasonore,
- mesure d'un deuxième paramètre de la réponse fréquentielle de la tige (14) à une excitation ultrasonore, et
- détermination de la valeur de la tension de la tige (14) en fonction au moins dudit un premier paramètre et dudit deuxième paramètre.

## FIG.1

FIG.2

Tension (v)

Temps (s)

Tension (v)

Temps (s)

Tension (v)

Temps (s)

FIG.3

FIG.4

## FIG.5

FIG.6

FIG.7

```
┌─────────────────┐
│                 │
│      E100       │
│      ───        │
│                 │
└─────────────────┘
         │
         ▼
┌─────────────────┐
│                 │
│      E102       │
│      ───        │
│                 │
└─────────────────┘
         │
         ▼
┌─────────────────┐
│                 │
│      E104       │
│      ───        │
│                 │
└─────────────────┘
```

# FIG.8

Europäisches
Patentamt

European
Patent Office

Office européen
des brevets

# RAPPORT DE RECHERCHE EUROPEENNE

Numéro de la demande

EP 25 18 2564

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | DE 10 2023 124319 A1 (ATLAS COPCO IND TECHNIQUE AB [SE]) 14 mars 2024 (2024-03-14) * alinéa [0041] - alinéa [0068] * * revendications 1,13 * * figures 1-6 * ----- | 1-11 | INV. G01L5/24 G01N29/07 G01N29/12 ADD. F16B31/02 G01N29/22 |
| A | US 3 822 587 A (MAKINO T ET AL) 9 juillet 1974 (1974-07-09) * colonne 5, ligne 1 - ligne 13 * * colonne 4, ligne 34 - colonne 5, ligne 15 * * revendication 1 * * figures 1-4 * ----- | 1-11 | |
| A | CN 116 465 537 A (UNIV SOUTHWEST JIAOTONG) 21 juillet 2023 (2023-07-21) * revendication 1 * * figures 1,2 * ----- | 1-11 | |
| A | US 4 899 591 A (KIBBLEWHITE IAN E [US]) 13 février 1990 (1990-02-13) * colonne 11, ligne 8 - ligne 16 * * colonne 12, ligne 3 - ligne 8 * * revendication 13 * * figures 4,5 * ----- | 1-11 | DOMAINES TECHNIQUES RECHERCHES (IPC) G01L F16B G01N |
| A | US 5 970 798 A (GLEMAN STUART M [US] ET AL) 26 octobre 1999 (1999-10-26) * colonne 6, ligne 53 - ligne 62 * * figures 1-5 * ----- | 1-11 | |

Le présent rapport a été établi pour toutes les revendications

| Lieu de la recherche | Date d'achèvement de la recherche | Examinateur |
|---|---|---|
| La Haye | 31 juillet 2025 | Verdoodt, Erik |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
                   
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**   EP 25 18 2564

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

31-07-2025

| Document brevet cité au rapport de recherche | Date de publication | Membre(s) de la famille de brevet(s) | Date de publication |
|---|---|---|---|
| DE 102023124319 A1 | 14-03-2024 | CN 117705329 A | 15-03-2024 |
| | | DE 102023124319 A1 | 14-03-2024 |
| | | SE 2230287 A1 | 15-03-2024 |
| US 3822587 A | 09-07-1974 | DE 2157303 A1 | 08-06-1972 |
| | | JP S4939035 B1 | 22-10-1974 |
| | | US 3822587 A | 09-07-1974 |
| CN 116465537 A | 21-07-2023 | AUCUN | |
| US 4899591 A | 13-02-1990 | AUCUN | |
| US 5970798 A | 26-10-1999 | AUCUN | |

EPO FORM P0460

Pour tout renseignement concernant cette annexe : voir Journal Officiel de l'Office européen des brevets, No.12/82